# EUROPEAN PATENT APPLICATION

(11) **EP 4 664 015 A1**
(43) Date of publication of application: **17.12.2025**
(21) Application number: 24181586.9
(22) Date of filing: 12.06.2024
(51) Int. Cl.: F24C 7/08, A23L 5/10, D06F 33/32, G06F 8/33, G06N 20/00, A47J 44/00

(54) **RECIPE CONVERTER**

(71) Applicant: BSH Hausgeräte GmbH, 81739 München (DE)
(72) Inventor: Sacha, Magdalena, 02-769 Warsaw (PL); Blum, Annette, 80469 München (DE); Jahn, Alena, 80797 München (DE); Kurzewska, Aleksandra, 81371 München (DE)

(57) **Abstract**

A method (200) for operating a household appliance (155) to carry out a predetermined household task comprises steps of determining functional capabilities of the household appliance (155); providing an LLM (130) that is trained to perform linguistic operations on an input text; reading into the LLM (130) a text-based, especially generic, recipe for carrying out said household task; and causing or triggering or prompting the LLM (130) to generate, based on the text-based recipe, operating instructions for operating the household appliance (155); such that the household appliance (155) can be operated on the basis of said generated instructions to carry out said household task.

## Description

The present invention concerns the generation of a recipe for operating a household appliance to realize a predetermined household task. More specifically, the present invention comprises generating a recipe, which is adapted to a specific household appliance, based on a generic recipe.

A household appliance is configured to be operated to perform or aid in a predetermined household task. The task may be expressed in the shape of a recipe. For instance, a food processor may be operated to prepare a predetermined dish according to a cooking recipe or a washing machine may be operated to clean garments (laundry) according to care instructions.

A modern household appliance may have more options or capabilities than a generic or traditional appliance. For instance, a traditional oven may just have a chamber that can be heated to a predetermined temperature, while a contemporary oven may also have a grill with which a dish may be cooked "au gratin". A recipe, in order to be usable with the largest possible range of household appliances, may be targeted at a very simple appliance, leaving additional functionality of an actual appliance unused.

More and more capable household appliances require more and more knowledge about how additional features can be used in performing a predetermined household task. A user's manual often remains unread or its contents not memorized thoroughly. It may also require processing knowledge to adapt a given recipe to a household appliance. Atypical user may therefore not be able to operate a household appliance in the best possible manner.

An object underlying the present invention lies in providing an improved technique for operating a household appliance for carrying out a predetermined household task. The invention solves above-mentioned object through the subject matter of the independent claims. Dependent claims describe preferred embodiments.

According to a first aspect of the present invention, a method for operating a household appliance to carry out a predetermined household task comprises steps of determining functional capabilities of the household appliance; providing an LLM that is trained to perform linguistic operations on an input text; and reading into the LLM a text-based, especially generic, recipe for carrying out said household task. Preferably, household specific instructions like settings for certain cooking actions or limitations of the appliance are also read in. The LLM may then be caused or triggered or prompted to generate, based on the text-based recipe, operating instructions for operating the household appliance; such that the household appliance can be operated on the basis of said generated instructions to carry out said household task. While generating the operating instructions for the household appliance, operating instructions may be extracted from the text-based recipe. The generated operating instructions may be much more specific than the generic instructions of the text-based recipe.

The LLM is a large language model which is a deep neural network that is trained to perform linguistic operations. Such training comprises configuration of hidden neural layers in the network and may be called deep learning. The LLM can especially be a generative pre-trained transformer (GPT). The LLM may be realized by a processing unit, especially of a computer. While training of an LLM may be a computationally expensive task, using a pre-trained model may not require large resources so that the LLM may be carried out by a reasonably equipped embedded or home computer. LLMs have become well known and widely available in both free and paid services. Examples for known LLMs comprise ChatGPT, Gemini (formerly known as Bard), Chatsonic or Phind.

The recipe is preferred to be a text description of actions, parameters or hints on how to treat some subject to carry out the household task. The household task may especially comprise cooking or cleaning or a related task. A recipe may be drawn from the Internet or passed from person to person. It may comprise symbols, pictograms or pictures which may be transcribed into text form. In some cases, a recipe may be extracted from a book, especially a cookbook, a textbook or an operation manual. The recipe may be attached to a subject to treat, for instance a garment to clean, or it may come as separate instructions. The recipe may comprise a link to an online recipe, copied text or a scanned book extract. Operating instructions may comprise an operation setting for the household appliance, like a temperature, a duration or a magnitude of a physical treatment.

Several approaches for causing the LLM to generate said operating instructions from the recipe are proposed herein, wherein different variants may be combined.

In a first variant, the LLM may be trained to relate recipe steps to appliance capabilities. Training may change an internal structure of the LLM so that an existing LLM may be adapted to the task at hand or a new LLM may be generated for the specific purpose. The training may be done separate from using the trained LLM in a method described herein. Training may require labeled training data, especially a set of generic text-based recipes and expected generated operation instructions.

In some embodiments, the LLM is a GPT and it is trained with a large amount of recipes, which are optimized for a food processor like the Cooklt or Thermomix from Vorwerk. These appliance-specific recipes may be in a tabularized form (i.e. in machine syntax). Such a tabularized recipe may be much more technical and less intuitively understandable for a human being like recipes in a textbook. Nevertheless, a tabularized recipe may be directly executable by a food processor and may exploit all capabilities of the food processor.

Generic pre-trained models may exhibit inherent limitations, often manifesting in hallucinations or a lack of expertise in specific domains. Their training demands significant computational resources, relying on extensive energy consumption and specialized GPU infrastructure.

It is preferred that the LLM is trained using a fine-tuning technique. In some embodiments, prompting or prompt engineering may be used to optimize the output of the LLM. While many methods of customizing an LLM can be called fine-tuning, it is preferred that fine-tuning comprises changing parameters of the model. That is, the model or a part of it is re-trained using traditional machine learning understanding or algorithms like LoRA (Low-Rank Adaptation; see "LoRA: Low-Rank Adaptation of Large Language Models" written by Edward J. Hu and Yelong Shen and Phillip Wallis and Zeyuan Allen-Zhu and Yuanzhi Li and Shean Wang and Lu Wang and Weizhu Chen in 2021; arXiv: 2106.09685; https://doi.org/10.48550/arXiv.2106.09685). Such methods may be more efficient and/or consume less hardware resources than the original model training. Note that prompting will generally not change a parameter of the model, while said fine-tuning techniques will.

In deep learning, fine-tuning is an approach to transfer learning in which the weights of a pre-trained model are trained on new data. Fine-tuning can be done on the entire neural network, or on only a subset of its layers, in which case the layers that are not being fine-tuned are "frozen" (not updated during a backpropagation step). A model may also be augmented with "adapters" that consist of far fewer parameters than the original model, and fine-tuned in a parameter-efficient way by tuning the weights of the adapters and leaving the rest of the model's weights frozen.

It is especially preferred to use a Parameter-Efficient Fine-Tuning (PEFT) technique for tuning. Such approaches were summarized 2023 by Vladislav Lialin, Vi-jeta Deshpande, Anna Rumshisky in "Scaling Down to Scale Up: A Guide to Parameter-Efficient Fine-Tuning" (arXiv: 2303.15647; see https://doi.org/10.48550/ arXiv.2303.15647)). Implementations of such techniques may be freely available from existing libraries or packages.

This innovation allows users to adapt a pre-trained model, especially an LLM which may already be trained with vast amounts of data, to their specific needs without requiring a formidable infrastructure. PEFT facilitates fine-tuning on narrower domains, thereby enhancing the LLM's performance in specialized contexts.

As we navigate the dynamic landscape of language technology, the pursuit of more efficient, domain-aware, and environmentally sustainable solutions remains crucial for further advancements in this field. Taking this into account, for example, the LoRA algorithm can be used to fine-tune the LLM in an efficient way.

The dataset used for this process may present to the LLM the differences between a traditional generic recipe, which is not optimized to the specific home appliance, which is possessed by the user (xₙ), and a recipe, that leverages optimal settings of the specific home appliance(_{Yn}) of the user. A dataset of pairs of a generic recipe and a corresponding optimized converted recipe {(xₙ,yₙ)|n = 1,...,N} may be collected as a training set by a respective machine learning specialist. The converted recipe is a basis for creating a computer/device readable set of instructions for a specific home appliance.

Navigating a landscape rich in domain-specific knowledge like the cooking domain, especially across various types and models of appliances, often demands a sophisticated approach. The use of a prompt chain and the skillful combination of prompts may be advantageous. Leveraging a sequence of prompts allows for the incorporation of specialized knowledge acquired from distinct tools and sources.

According to a second variant, which may be combined with all other embodiments, the LLM may be prompted to generate said operating instructions. This approach may be used both with a general LLM or a specifically trained or fine-tuned LLM. Prompting generally does not change the internal structure of the LLM. By finding or constructing a prompt, the LLM may be caused or triggered to perform just about any expressible operation on the input text. The information that was used to train the LLM may amount to a certain world model that is, in effect, very similar to a certain degree of understanding of a text or its contents. Such a model may be based on an observation of possible uses of a fact, a word or an expression. Synonyms or cause-and-effect chains may be accounted for. An advanced LLM may be prompted to perform logical operations on the text that go far beyond word replacement and target at a novel combination of facts or operations.

A sequence of prompts may be generated to arrive at an operating instruction. It may be easier to have the LLM perform the generation in several steps so that the generation is divided into subtasks that may be easier to handle. Also, intermediate results may be checked for correctness. In some cases, a chain of prompts may later be integrated into one prompt. Chain-of-thought Prompting was describe e.g. in "Chain-of-Thought Prompting Elicits Reasoning in Large Language Models" written by Jason Wei, Xuezhi Wang, Dale Schuurmans, Maarten Bosma, Brian Ichter, Fei Xia, Ed Chi, Quoc Le and Denny Zhou in 2023 (see arXiv: 2201.11903; https://doi.org/10.48550/arXiv.2201.11903).The sequence may be steered by an LLM-based agent. Preferably, an autonomous agent as described in 2023 by Lei Wang, Wanyu Xu, Yihuai Lan, Zhiqiang Hu, Yunshi Lan, Roy Ka-Wei Lee, Ee-Peng Lim in "Plan-and-Solve Prompting: Improving Zero-Shot Chain-of-Thought Reasoning by Large Language Models" can be used (see arXiv: 2305.04091; https://doi.org/10.48550/arXiv.2305. 04091). In the realm of a highly complex and diverse knowledge domain, such as the home appliances and/or cooking domain, autonomous agent systems can represent a compelling solution.

The sequence of prompts may leverage Retrieval-Augmented Generation (RAG). RAG was described in 2021 by Patrick Lewis, Ethan Perez, Aleksandra Piktus, Fabio Petroni, Vladimir Karpukhin, Naman Goyal, Heinrich Küttler, Mike Lewis, Wen-tau Yih, Tim Rocktäschel, Sebastian Riedel, Douwe Kiela in "Retrieval-Augmented Generation for Knowledge-Intensive NLP Tasks" (see arXiv: 2005.11401; https://doi.org/10.48550/arXiv.2005.11401). RAG is a form of an advanced prompt including retrieval steps. The sequence may be predefined for instance by a developer or designed by an autonomous agent based on knowledge about accessible tools. In this context, a tool may be an element of a seqence, wherein a tool may be just a prompt or a prompt enriched with additional knowledge (RAG).

RAG may enable individual tools within the prompt chain to access additional knowledge, contributing to a more informed and contextually aware decision-making process. This dynamic interaction between tools and their ability to harness supplementary information can result in a more robust and adaptive problem-solving methodology.

A prompt generally may contain input and some task description, behavior explanation or role definition. In the case of RAG, the prompt may be a combination of input data, a task description and additional internal data.

RAG may offer the advantage of building upon the insights gained in each successive step, creating a non-deterministic path based on the outcomes of individual stages. Moreover, the application of a technique like RAG may further enhance the process. The utilization of prompt chains and RAG techniques may navigate complex scenarios efficiently.

The proposed system can be designed in two (or more) ways. Generated recipes can be purely natural language texts containing only settings in a human readable way, which can usually not be understood directly by a household appliance. Alternatively, the system may be responsible for generating sets of commands that can be sent to an appliance (machine syntax). Such output is usually not human-readable or not directly understandable for a human.

The recipe may comprise operating instructions for a generic household appliance of a predetermined type; and the household appliance is of that type. Using the LLM, the recipe's instruction may be adapted to use functional capabilities of the household appliance that go beyond capabilities of the generic household appliance. For instance, the household appliance may comprise a traditional oven in the shape of a heatable tube section, whereas the specific household appliance in question may comprise a multi-function oven with additional capabilities for air circulation, steaming or microwaving. In another embodiment, the specific household appliance may be of a different, but comparable type to the generic household appliance. This may be the case if the specific appliances is just a microwave oven, which may perform some, but not necessarily all functions of a generic oven, like browning or scalloping.

The functional capabilities may comprise an operating program of the household appliance and the operating instructions may comprise a selection and/or a parametrization of the program. The program may comprise a processing program, especially for food processing, a dishwasher program, or a treating program, especially for garment treatment.

The recipe may comprise operating instructions for a first and a second household appliance; wherein the instructions cause the household appliance to carry out tasks of both the first and second appliances in the original recipe. In this way, a recipe that is targeted at using a plurality of standard household appliances may be implemented by just one household appliance. This may make processing or treating much simpler.

Of course, a step which is intended to be carried out manually by the recipe may be translated into a step that is carried out by the household appliance. It is to be noted that the generation of steps for the appliance may require amending or reordering recipe steps or adjusting time-based relationships between steps and/or instructions.

In some embodiments, the given task may not be carried out with the household appliance alone. A converted recipe may comprise, in addition to the generated instructions, further instructions for carrying out said household task, wherein the further instructions go beyond operation of said household appliance. In some embodiments, the further instructions may not involve the specific household appliance and may be intended to be carried out by hand or by using another household appliance. Thus, a complete recipe may be provided which may be followed to carry out said household task.

The recipe may relate to a preparation of food and the household appliance may comprise a kitchen appliance. The appliance may comprise a food processor, especially of an integrated type, which may function as one or several of an oven, a cooktop, a blender, a mixer, a microwave oven or a steamer.

In some embodiments, the recipe may relate to garment treatment and the household appliance comprises a garment treating machine. Such a machine may implement one or more of washing, drying, ironing, steaming, folding or freshing-up garments. The recipe may be drawn from a care label attached to a garment.

According to another aspect of the present invention, a recipe converter for operating a household appliance to carry out a predetermined household task comprises an input interface; an output interface; an interface to an LLM which is trained to perform linguistic operations on an input text; and processing means. The processing means may be adapted to determine functional capabilities of the household appliance; read into the LLM a text-based, especially generic, recipe for carrying out said household task (potentially together with appliance specific data); and cause or trigger or prompt the LLM to generate, based on the text-based recipe, operating instructions for operating the household appliance; such that the household appliance can be operated on the basis of said generated instructions to carry out said household task.

The processing means may be adapted to carry out, completely or in part, a method disclosed herein. The processing means may be of electronic nature and comprise a micro-computer or micro-controller, an ASIC or a similar apparatus. The method may be realized as a computer program product with program code means and may be stored on a computer readable medium. Features or advantages of the method may be applicable to a corresponding appliance or system as well as vice versa.

Non-restricting embodiments of the invention will now be discussed in more detail with reference to the enclosed drawings in which:
- Figure 1: shows a system;
- Figure 2: shows a flow diagram of a method;
- Figure 3: shows exemplary sequences of steps / instructions for carrying out a predetermined household task; and
- Figure 4: shows options for a transformation of a generic recipe into a converted recipe in machine syntax.

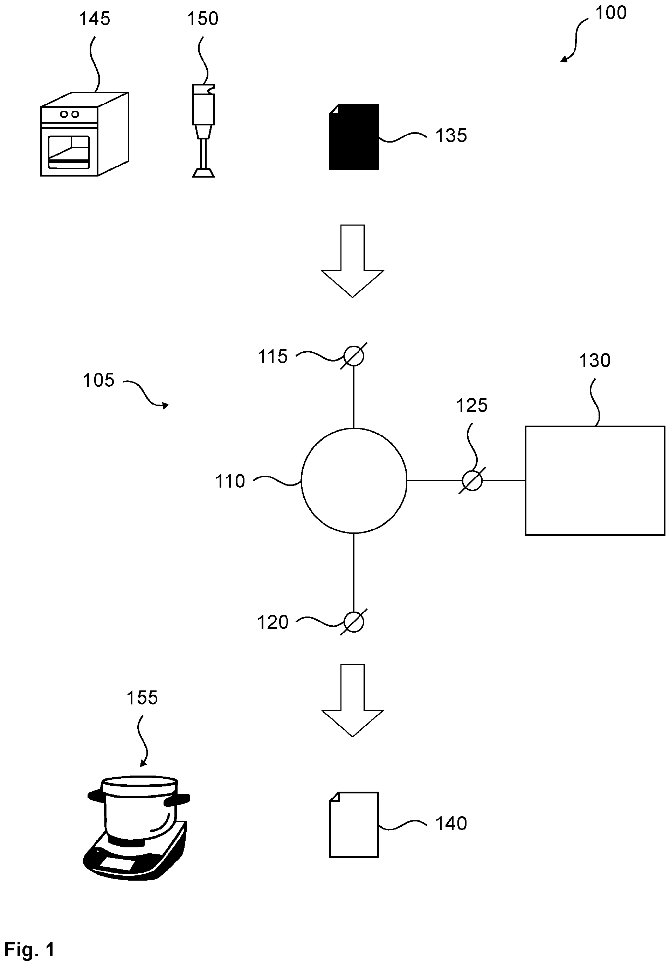

Figure 1 shows an exemplary system 100. A recipe converter 105 comprises a processing unit 110 with an input interface 115, an output interface 120 and another interface 125 that is connected to a large language model (LLM) 130. The LLM may be provided locally or connected through a communication network like the internet. The LLM may be of a general type and is trained, on the basis of massive amounts of texts, to perform linguistic and/or content based operations on some input text.

The recipe converter 105 is adapted to convert a first recipe 135 for carrying out a predetermined household task into a second recipe 140 for the same task. A recipe 135, 140 may comprise steps or instructions for carrying out said task. The first recipe 135 is preferred to be generic and/or text-based. Optionally, the LLM 130 may be used to convert non-textual information like a logo, a symbol, spoken text or a moving or still picture into text form. The first recipe 135 may have been written with one or several household appliances 145, 150 in mind. Such appliances 145, 150 are preferred to be of general or simple nature. In the exemplary embodiment of Figure 1, there is an oven 145 and a mixer 150, however, other generic appliances are also possible. However, it is often not known what functions a first appliance 145, 150 is supposed to fulfil.

The second recipe 140 comprises operating instructions for operating a predetermined specific second household appliance 155 which may be more complex, more advanced, more sophisticated or more versatile than a first household appliance 145, 150. In one embodiment, a first household appliance 145, 150 may denote a generic appliance or a type of appliance. The second household appliance 155 may fall into this category and may offer functionality that goes beyond that. The second household appliance may comprise a micro-computer and/or may be programmable.

It is proposed to prompt or trigger the LLM 130 to generate operating instructions for processing the first recipe 135 with the help of the second household device 155. Determining instructions may be done on the basis of a description of capabilities of said second household appliance 155. Several techniques for facilitating this are disclosed herein.

It should be noted that the first recipe 135 does not have to be targeted at a predetermined first appliance 145, 150, but may rely on manual techniques for preparation. In this case, operating instructions may be generated that employ the second appliance 155 to implement a manual step of the first recipe 135. In other cases there may be more first appliances 145, 150 mentioned in the first recipe 135 than second appliances 155 in the second recipe 140 or vice versa. In yet another case there may be the same number of appliances 145, 150, 155 mentioned in the first and second recipes 135, 140. It is preferred that the second recipe 140 mentions at least one second appliance 155 that is not mentioned in the first recipe 135.

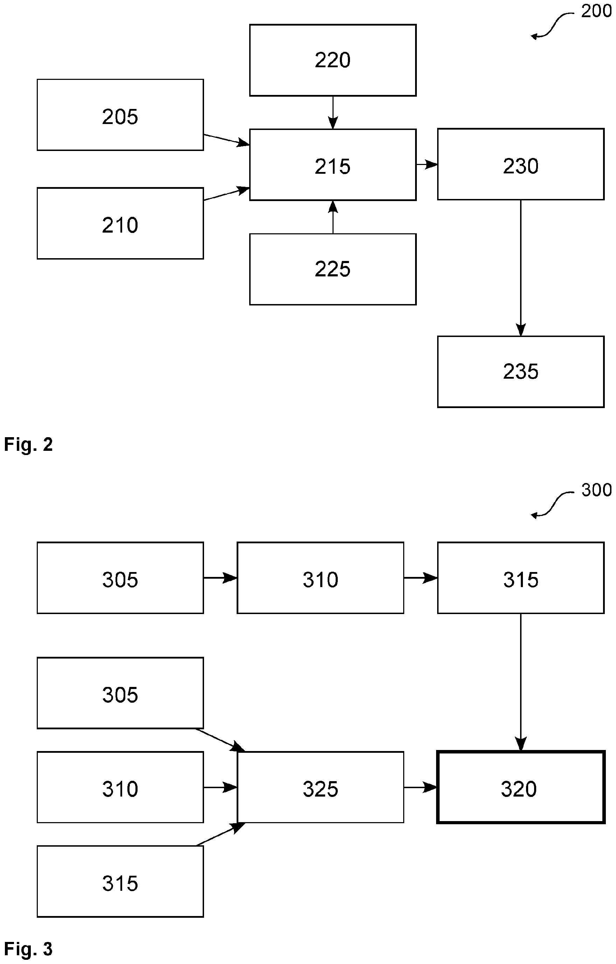

Figure 2 shows an exemplary method for performing such a translation or extraction. In a step 205 a description of the household task at hand may be determined. In a step 210 recipe data of the first recipe 135 may be determined. Both steps may comprise user interaction and information may be drawn from one or several sources. If necessary, data may be converted into text form. This may comprise speech-to-text conversion or image recognition. Possibly, textual data is automatically translated from one language to another, alternatively later processing with an LLM may be done on mixed language data. The text-based first recipe and/or the task description may then be read into the LLM 130. The task description may be used for prompt generation and/or processing inside the LLM 130.

In a step 215, a prompt for the LLM 130 may be generated. The prompt is targeted at causing or triggering the LLM 130 to perform said generation, translation or extraction. Optionally, a sequence of prompts may be generated and a result of the LLM 130 in answer to a prompt may be processed. This may be done in batch fashion, where a series of prompts is determined before passing them on to the LLM 130 or in an interactive mode, where the output from processing a first step forms the basis for determining a second prompt. In this way, prompt generation may for instance comprise error checking, sorting and/or ordering, according to predetermined instructions.

Generating the prompt in step 215 is preferred to be based on knowledge on the second home appliance 155. In some variants the prompt may be generated based also on knowledge of the first home appliance 145, 150. Note that the present technique is not limited to converting a recipe from one device to another, but may work with just any random recipe and the use of a first home appliance 145, 150 in the first recipe 135 is not mandatory.

To this end, corresponding description data may be acquired in a step 220. Said information may also be fed into the LLM 130 for processing according to a prompt. There may be a machine-processable description of the capabilities of a home appliance 145, 150, 155 or information may be drawn from a user manual, a description or handling tips. Such information may be drawn from the internet and may come for instance from the manufacturer, a tools test or comparison article, a collection of appliance recommendations (e.g. on social media) or a cooking web-site.

Also, knowledge from a previous process, step or instruction may be used for generating the prompt in step 215. Corresponding information may be retrieved from a local data store in a step 225. Such historic data is preferred to be primarily used for prompt generation; the LLM 130 may keep its own history of past steps. However, external step information may be made available to the LLM 130 in some embodiments.

The prompt of step 215 may be applied to the LLM 130 in a step 230. The LLM may be of a general type that is not especially adapted to perform the generation of operating instructions described herein. However, it may be pre-trained or fine-tuned for such operations on the basis of predetermined training data that provides examples of such a transformation of a first recipe into a second recipe. In a step 235 a result of the processing may be provided.

Figure 3 shows an exemplary flow chart 300 for steps in a second recipe 140 for carrying out a predetermined household task. In a first variant, a sequence of a first step 305, a second step 310 and a third step 315 lead to a result 320. Each step 305-315 may be generated on the basis of an associated prompt using the LLM. In a second variant, steps 305-315 are combined in a step 325. The main difference between the first and the second approach is the possible paralleliza-tion. According to the second variant, some or all of the steps 305-315 may be done independently or concurrently and their results may then be combined.

A combination 325 may be made as an encapsulation of the steps 305-315. In the alternative, a prompt may be constructed that encapsulates or otherwise wraps up the steps 305-315. The combination 325 may especially be carried out automatically. Thus, the flow chart of figure 3 may be part of the method shown in figure 2.

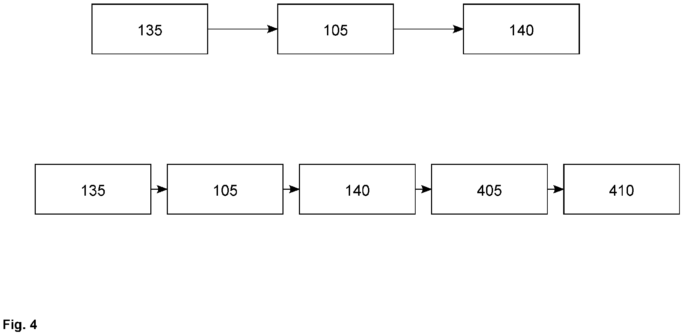

Figure 4 shows options for a transformation of a generic recipe into a converted recipe in machine syntax using the described LLM, especially a GPT.

The proposed system can be designed in two (or more) ways. According to a first option, the recipe converter 105 is responsible for generating sets of instructions (machine syntax) that can be sent to a second appliance 155. In an upper portion, figure 4 shows such a generation of a second recipe 140 on the basis of a first recipe 135.

According to a second option, the provided second recipe 140 is a purely natural language text containing only settings in a human readable form. Such a generation is shown in a lower portion of figure 4. In order to use a generated operation instruction for operating the second household appliance 155, an additional converter 405 may be employed to provide a second recipe 140 in an adapted form 410, which comprises machine syntax which can be directly processed by the second appliance 155.

### Reference list (as part of the description)

- 100: system
- 105: recipe converter
- 110: processing unit
- 115: input interface
- 120: output interface
- 125: LLM interface
- 130: LLM
- 135: first recipe
- 140: second recipe
- 145: first household appliance
- 150: first household appliance
- 155: second household appliance
- 200: method
- 205: task description
- 210: recipe data
- 215: prompt
- 220: home appliance and task specific knowledge
- 225: knowledge from previous steps
- 230: pre-trained / fine-tuned LLM
- 235: result
- 300: flow chart
- 305: first step
- 310: second step
- 315: third step
- 320: result
- 325: combination
- 405: converter
- 410: second recipe in machine syntax

## Claims

1. Method (200) for operating a household appliance (155) to carry out a predetermined household task, the method comprising steps of:
- determining (220) functional capabilities of the household appliance (155);
- providing an LLM (130) that is trained to perform linguistic operations on an input text;
- reading (210) into the LLM (130) a text-based, especially generic, recipe for carrying out said household task; and
- causing (215, 230) or triggering or prompting the LLM (130) to generate, based on the text-based recipe, operating instructions for operating the household appliance (155);
- such that the household appliance (155) can be operated on the basis of said generated instructions to carry out said household task.

2. Method (200) according to claim 1, wherein the LLM (130) is trained (230) to relate recipe steps to appliance (155) capabilities.

3. Method (200) according to claim 2, wherein the output of the LLM (130) is optimized using prompt engineering.

4. Method (200) according to one of the above claims, wherein the LLM (130) is prompted (215) to generate said operating instructions.

5. Method (200) according to claim 4, wherein a sequence of prompts is used to generate an operating instruction.

6. Method (200) to claim 5, wherein the sequence is steered by an LLM-based agent.

7. Method (200) to claim 5 or 6, wherein the sequence is generated using RAG.

8. Method (200) according to one of the above claims, wherein a new recipe (140) is generated on the basis of input in a form of a generic text-based recipe.

9. Method (200) according to one of the above claims, wherein the recipe (135) comprises operating instructions for a generic household appliance (145) of a predetermined type; and the household appliance (155) is of that type; and wherein the recipe's (140) instructions are adapted to use functional capabilities of the household appliance (155) that go beyond capabilities of the generic household appliance (145).

10. Method (200) according to one of the above claims, wherein the functional capabilities comprise an operating program of the household appliance (155) and the operating instructions comprise a selection and/or a parametrization of the program.

11. Method (200) according to one of the above claims, wherein the recipe (135) comprises operating instructions for a first and a second household appliance (145); and wherein the generated instructions (140) cause the household appliance (155) to carry out tasks of both the first and second appliances (145) in the original recipe (135).

12. Method (200) according to one of the above claims, wherein a converted recipe (140) is generated which additionally comprises instructions for carrying out said household task that go beyond operation of said household appliance (155).

13. Method (200) according to one of the above claims, wherein the recipe (135, 140) relates to a preparation of food and the household appliance (155) comprises a kitchen appliance.

14. Method (200) according to one of claims 1 through 12, wherein the recipe (135, 140) relates to garment treatment and the household appliance (155) comprises a garment treating machine.

15. Recipe converter (105) for operating a household appliance (155) to carry out a predetermined household task, the recipe converter comprising:
- an input interface (115);
- an output interface (120);
- an interface (125) to an LLM (130) which is trained to perform linguistic operations on an input text;
- processing means (110) which are adapted to:
- determine functional capabilities of the household appliance (155);
- read into the LLM (130) a text-based, especially generic, recipe for carrying out said household task; and
- cause or trigger or prompt the LLM (130) to generate, based on the text-based recipe, operating instructions for operating the household appliance (155);
- such that the household appliance (155) can be operated on the basis of said generated instructions to carry out said household task.

## Amended claims

### Amended claims in accordance with Rule 137(2) EPC.

1. Method (200) for operating a household appliance (155) to carry out a predetermined household task, the method comprising steps of:
- determining (220) functional capabilities of the household appliance (155);
- providing an LLM (130) that is trained to perform linguistic operations on an input text;
- reading (210) into the LLM (130) a text-based, especially generic, recipe for carrying out said household task; and
- causing (215, 230) or triggering or prompting the LLM (130) to generate, based on the text-based recipe, operating instructions for operating the household appliance (155);
- such that the household appliance (155) can be operated on the basis of said generated instructions to carry out said household task;
**characterized in that**
- the LLM (130) is trained (230) to relate recipe steps to appliance (155) capabilities and is prompted (215) with a sequence of prompts to generate said operating instructions, wherein the sequence of prompts leverages Retrieval-Augmented Generation.

2. Method (200) according to claim 1, wherein the output of the LLM (130) is optimized using prompt engineering.

3. Method (200) to claim 1 or 2, wherein the sequence is steered by an LLM-based agent.

4. Method (200) according to one of the above claims, wherein a new recipe (140) is generated on the basis of input in a form of a generic text-based recipe.

5. Method (200) according to one of the above claims, wherein the recipe (135) comprises operating instructions for a generic household appliance (145) of a predetermined type; and the household appliance (155) is of that type; and wherein the recipe's (140) instructions are adapted to use functional capabilities of the household appliance (155) that go beyond capabilities of the generic household appliance (145).

6. Method (200) according to one of the above claims, wherein the functional capabilities comprise an operating program of the household appliance (155) and the operating instructions comprise a selection and/or a parametrization of the program.

7. Method (200) according to one of the above claims, wherein the recipe (135) comprises operating instructions for a first and a second household appliance (145); and wherein the generated instructions (140) cause the household appliance (155) to carry out tasks of both the first and second appliances (145) in the original recipe (135).

8. Method (200) according to one of the above claims, wherein a converted recipe (140) is generated which additionally comprises instructions for carrying out said household task that go beyond operation of said household appliance (155).

9. Method (200) according to one of the above claims, wherein the recipe (135, 140) relates to a preparation of food and the household appliance (155) comprises a kitchen appliance.

10. Method (200) according to one of claims 1 through 8, wherein the recipe (135, 140) relates to garment treatment and the household appliance (155) comprises a garment treating machine.

11. Recipe converter (105) for operating a household appliance (155) to carry out a predetermined household task, the recipe converter comprising:
- an input interface (115);
- an output interface (120);
- an interface (125) to an LLM (130) which is trained to perform linguistic operations on an input text;
- processing means (110) which are adapted to:
- determine functional capabilities of the household appliance (155);
- read into the LLM (130) a text-based, especially generic, recipe for carrying out said household task; and
- cause or trigger or prompt the LLM (130) to generate, based on the text-based recipe, operating instructions for operating the household appliance (155);
- such that the household appliance (155) can be operated on the basis of said generated instructions to carry out said household task;
**characterized in that**
- the LLM (130) is trained (230) to relate recipe steps to appliance (155) capabilities and
- the processing means (110) is further adapted to prompt (215) the LLM (130) with a sequence of prompts to generate said operating instructions, wherein the sequence of prompts leverages Retrieval-Augmented Generation.
